# EUROPEAN PATENT APPLICATION

(11) **EP 3 333 054 A1**
(43) Date of publication of application: **13.06.2018**
(21) Application number: 17201755.0
(22) Date of filing: 15.11.2017
(51) Int. Cl.: B62H 3/00, E04H 6/00, B62H 3/12

(54) **SUPPORT FOR SLIDABLE MULTIPLE BICYCLE STANDS**

(30) Priority: 12.12.2016 SI 201600300
(71) Applicant: Novak, Jakob, 1000 Ljubljana (SI)
(72) Inventor: Novak, Jakob, 1000 Ljubljana (SI)
(74) Representative: Ivancic, Bojan

(57) **Abstract**

The present invention refers to a device to accommodate a plurality of bicycles in order to store and/or transport them, which can be fixed to a wall of a stationary object, such as a garage for instance, or to a wall of a movable object, such as a road or rail or water vehicle for example. It is provided for according to the invention that the device to accommodate a plurality of bicycles comprises at least two rails (1, 2) located on a frame (3), wherein said rails being arranged mutually spaced and extend in parallel to each other. Mounts (4) are moveable in longitudinal direction of the rails (1, 2), wherein each mount (4) comprises a receptacle (5) for the bicycle (D) arranged close to each other, and a pair of trolleys (6, 7) each arranged on the mount (4) in the region of the rails (1, 2) and provided for cooperation therewith.

## Description

The present invention refers to a device to accommodate a plurality of bicycles in order to store and/or transport them, which can be fixed to a wall of a stationary object, such as a garage for instance, or to a wall of a movable object, such as a road or rail or water vehicle for example.

Known are devices for accommodation of a plurality of bicycles in order to store and/or transport them, which can be fixed to a front or a back wall of a road vehicle, such as a bus for example. Bicycles must be arranged in the accommodating device in two or more levels and, optionally, offset in two axis. A structure of a bicycle represents rather a big problem with storing and/or transport of the plurality of bicycles, since a handlebar and a drivetrain system substantially obstruct placing and removing a bicycle to and, respectively, from the accommodating device. In addition, prior to removal of a particular bicycle from the accommodating device at least two, if not even all, neighbouring bicycles have to be removed, and after removal of a particular bicycle they have to be repositioned again in the device.

It is the object of the present invention to create a device to accommodate a plurality of bicycles in order to store and/or transport them, which can be fixed either to a wall of a stationary or a movable object.

The object as set forth is solved, according to the present invention, by features disclosed in the characterising part of claim 1. Detail of the invention is disclosed in respective sub-claims.

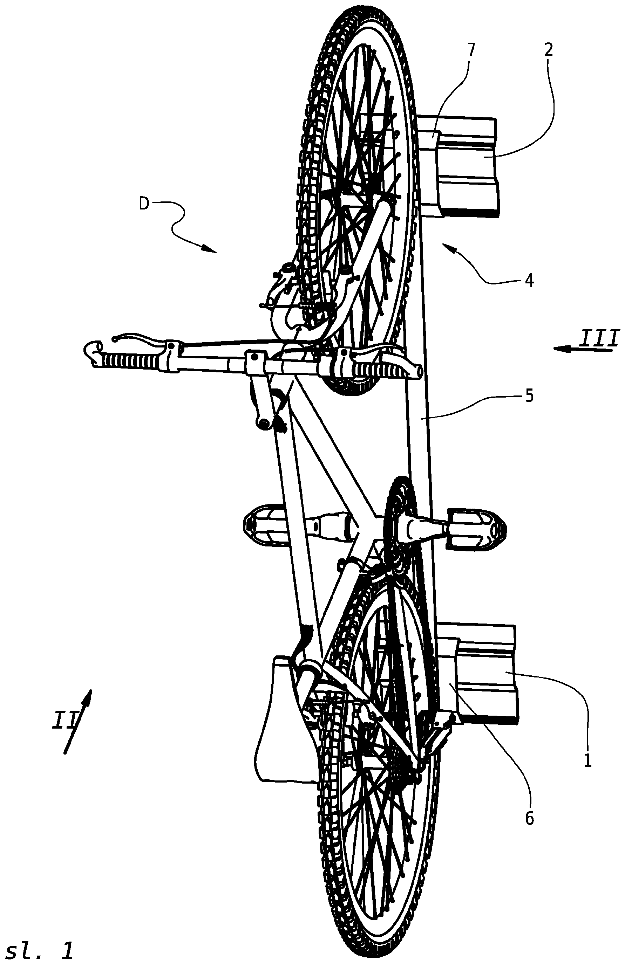

The invention is further described in detail by way of non-limiting embodiment, and with a reference to the accompanying drawings, where
- Fig. 1: shows a schematic three-dimensional view of a device to accommodate a plurality of bicycles in order to store and/or transport them,

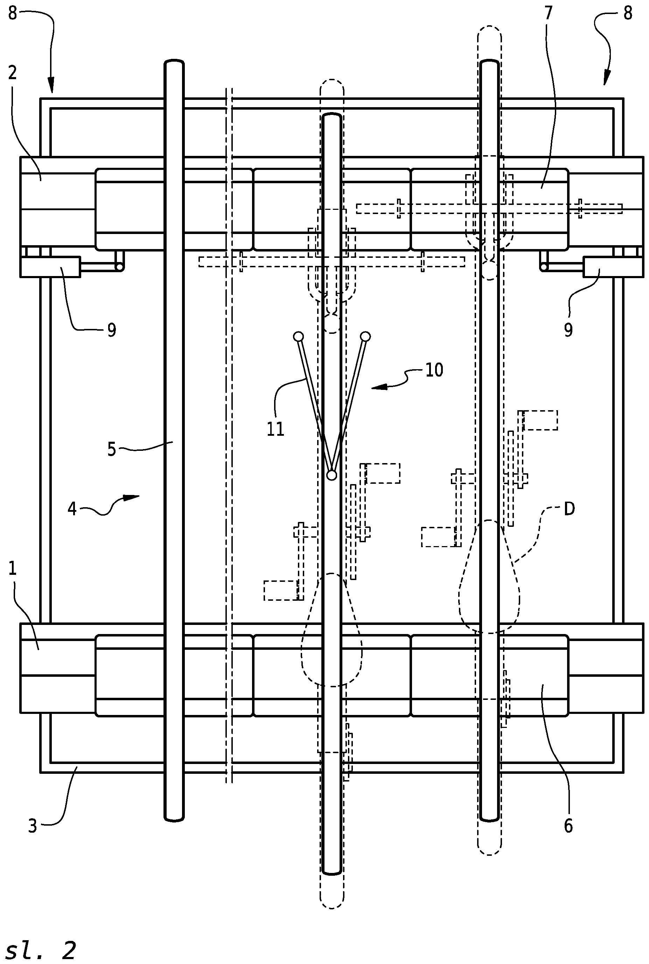

- Fig. 2: shows a device of Fig. 1 viewed in direction of the arrow **II,**

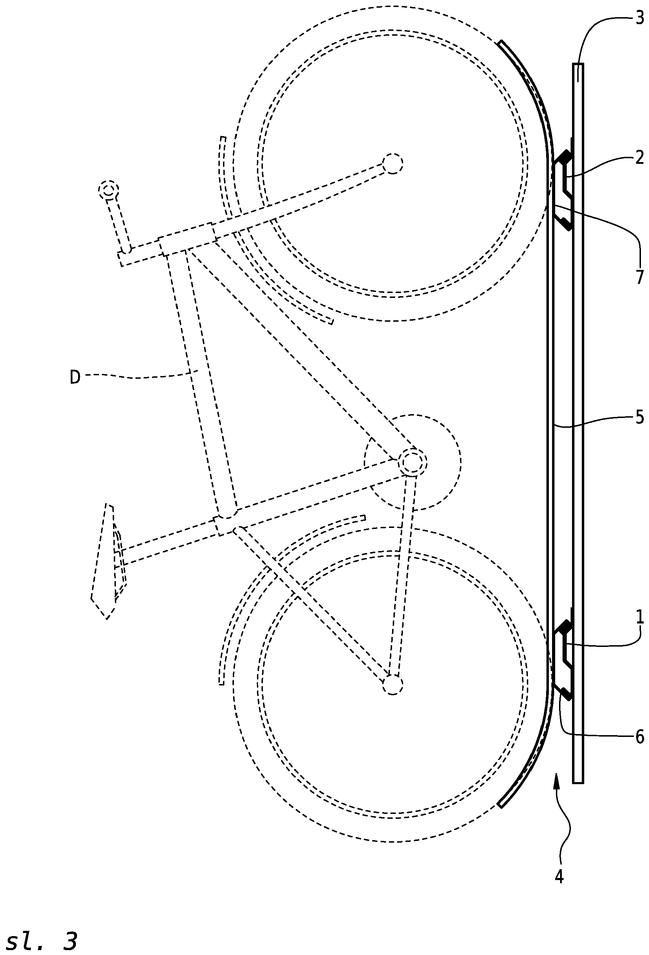

- Fig. 3: shows a device of Fig. 1 viewed in direction of the arrow **III.**

A device for accommodating a plurality of bicycles in order to store and/or transport them according to the invention comprises at least two approximately horizontal rails 1, 2 which are spaced from each other and extends mutually in parallel, said rails being fixed to a frame 3 in a known manner not shown in detail. Said frame 3 with attached rail 1, 2 can be fixed, preferably in a vertical position, both to a stationary object or a movable object. The stationary object is meant to be a wall of a building, such as of a garage, of a cellar or similar, for example, where bicycles are stored. The moveable object is meant to be a road vehicle, a rail vehicle or a water vehicle, for example, where the bicycles are carried usually on a front or on a back of the vehicle or in the vehicle. A plurality of mounts 4 for bicycles D is arranged on the rails 1, 2, said mounts extend transversally, preferably perpendicularly, to the direction of rails 1, 2, and are moveable in longitudinal direction of the rail 1, 2. Each mount 4 comprises a receptacle 5 for the bicycle D and a pair of trolleys 6, 7 each being arranged on the mount in the region of the rails 1, 2. At least one of receptacles 5 is formed in a manner that it can be extended and/or shortened according to the length of a bicycle D. Said trolleys 6, 7 are configured for cooperation with the rails 1, 2. Said mounts 4 are usually arranged on the rails 1, 2 close to each other, so that the trolleys 6, 7 of the two neighbouring receptacles 5 are in close contact. In this way, a smallest possible distance is obtained between the two neighbouring receptacles 5 and, respectively, between bicycles D arranged in the receptacles 5. Each receptacle 5 is provided with at least one fixing means to fix the bicycle D, wherein said fixing means is known per se and not shown in detail and is provided in the contact region of each wheel of the bicycle D with the receptacle 5. Optionally, each bicycle D is secured in the receptacle 5 by means of an additional fixing means against acting of side forces that would overturn a bicycle D with regard to the receptacle 5. To this extent, said additional fixing means grabs a frame of a bicycle D, preferably in the region above pedals of a bicycle D.

By providing said smallest possible spacing between the two neighbouring receptacles 5 unwanted moving of the mount 4 on the rails 1, 2 is prevented, too. In order to additionally prevent movement of the mounts 4 over the rail 1, 2, there is provided in at least one end region 8 of at least one rail 1, 2 a holding means 9, which is fixed on one hand to said frame 3, and is fixed on the other hand to each first trolley 6, 7 arranged at the most distant ends of the rail 1, 2. Said holding means 9 is selected as a pneumatic drive, an electrical actuator or similar, wherein medium for powering pneumatic drives is supplied from the system supply of the compressed air of the road vehicle, such as of the bus for instance. When the plurality of bicycles D is placed in the device for accommodating bicycles, wherein said device is arranged for example on the road vehicle during driving thereof, said holding means 9 acts under the influence of compressed air upon the trolleys 6, 7, presses the latter to each other and holds them fixed in a stationary transport position. When the bicycle D is to be removed from the device for accommodation of the bicycles, said holding means 9 shift due to the influence of compressed air each outermost trolley 6, 7 and, respectively, the mount 4, thus, enabling shifting of remaining trolleys 6, 7 and, respectively, the mounts 4, and as a result enabling easy removing of the bicycle D from the device for accommodation of the bicycles.

In order to further increase space efficiency in the device for accommodating bicycles is provided for, according to the present invention, that the receptacles 5 are alternately misaligned in the height of the frame 3. Said misaligning is provided in an extent that the handlebar of one of the bicycles D does not reach in the region of the handlebar of the neighbouring bicycle. Optionally, a misalignment of the receptacles 5 in the depth of the frame 3 is possible, that is in direction approximately perpendicularly to the wall the frame 3 is fixed to.

It is further provided according to the present invention that the entire frame 3 together with rails 1, 2 and the mounts 4 arranged thereon is movable in the height of the wall the frame 3 is fixed to. Said provision facilitates placing and, respectively, removing bicycles D in and, respectively, from the mounts 4.

To even further facilitate placing and, respectively, removing bicycles D in and, respectively, from the mounts 4 it is provided that each mount 4 comprises a means 10 for spacing the mounts 4, said means 10 being operated for example by a pneumatic drive, an electrical actuator or by a foot. It is provided for with the present embodiment that said means 10 comprises a two-leg lever 11 which can be spread, by means of said pneumatic drive, an electrical actuator or by a foot, for example, in a plane of the frame 3, wherein each leg of the two-leg lever 11 presses onto the neighbouring mount 4, thus, pushing all other mounts 4 aside.

## Claims

1. A device to accommodate a plurality of bicycles in order to store and/or transport them, which can be fixed to a wall of a stationary object, such as a garage for instance, or to a wall of a movable object, such as a road or rail or water vehicle for example, ***characterized in that*** said device comprises at least two rails (1, 2) on a frame (3), wherein said rails being arranged mutually spaced and extend in parallel to each other, a plurality of mounts (4) for bicycles (D) being arranged close to each other on said rails (1, 2), wherein the mounts (4) are moveable in longitudinal direction of the rails (1, 2), and wherein each mount (4) comprises a receptacle (5) for the bicycle (D) and a pair of trolleys (6, 7) each arranged on the mount (4) in the region of the rails (1, 2) and provided for cooperation therewith.

2. A device to accommodate bicycles according to claim 1, ***characterized in that*** the frame (3) with rails (1, 2) attached thereto can be fixed, preferably in a vertical position, both to a stationary and to a movable object.

3. A device to accommodate bicycles according to claim 2, ***characterized in that*** the stationary object is selected as a wall of a building, such as of a garage, of a cellar or similar, for example, where bicycles are stored.

4. A device to accommodate bicycles according to claim 2, ***characterized in that*** the movable object is selected as a road vehicle, a rail vehicle or a water vehicle, for example, where the bicycles are carried usually on a front or on a back of the vehicle or in the vehicle.

5. A device to accommodate bicycles according to any of the preceding claims, ***characterized in that*** each mount (4) comprises a means (10) for spacing the mounts (4) operated for example by a pneumatic drive, by an electrical actuator or by foot.

6. A device to accommodate bicycles according to claim 5, ***characterized in that*** said means (10) comprises a two-leg lever (11) that can be spread in the plane of the frame (3) by means of a pneumatic drive, by an electrical actuator or by foot, for example.

7. A device to accommodate bicycles according to any of the preceding claims, ***characterized in that*** in at least one end region (8) of at least one rail (1, 2) there is provided a holding means (9), which is fixed on one hand to said frame (3) and on the other hand to each first trolley (6, 7) arranged at the most distant ends of the rail (1, 2).

8. A device to accommodate bicycles according to claim 5, ***characterized in that*** said holding means (9) is selected as a pneumatic drive, an electrical actuator or similar.

9. A device to accommodate bicycles according to any of the preceding claims, ***characterized in that*** each receptacle (5) is provided with at least one fixing means to fix the bicycle (D), said fixing means being located in the contact region of each wheel of the bicycle (D) with the receptacle (5).

10. A device to accommodate bicycles according to any of the preceding claims, ***characterized in that*** each bicycle (D) is secured against acting of side forces in the receptacle (5) by means of an additional fixing means.

11. A device to accommodate bicycles according to any of the preceding claims, ***characterized in that*** the receptacles (5) are alternately misaligned in the height and/or in the depth of the frame (3).
